(19)

Europäisches
Patentamt
European
Patent Office
Office européen
des brevets

(11) **EP 3 508 542 A1**

(12) # EUROPEAN PATENT APPLICATION
published in accordance with Art. 153(4) EPC

(43) Date of publication:
**10.07.2019 Bulletin 2019/28**

(21) Application number: **17846628.0**

(22) Date of filing: **31.08.2017**

(51) Int Cl.:
**C09J 7/20** (2018.01)

(86) International application number:
**PCT/JP2017/031289**

(87) International publication number:
**WO 2018/043624 (08.03.2018 Gazette 2018/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **01.09.2016 JP 2016170941**

(71) Applicant: **Nitto Denko Corporation
Ibaraki-shi, Osaka 567-8680 (JP)**

(72) Inventors:
• **CHIBA, Mizuho
Ibaraki-shi
Osaka 567-8680 (JP)**

• **SHIMOKITA, Keisuke
Ibaraki-shi
Osaka 567-8680 (JP)**
• **DOI, Asami
Ibaraki-shi
Osaka 567-8680 (JP)**
• **TAKAHASHI, Akiko
Ibaraki-shi
Osaka 567-8680 (JP)**
• **OOTAKE, Hironao
Ibaraki-shi
Osaka 567-8680 (JP)**

(74) Representative: **Grünecker Patent- und
Rechtsanwälte
PartG mbB
Leopoldstraße 4
80802 München (DE)**

(54) **WATER-DISPERSED ACRYLIC ADHESIVE COMPOSITION**

(57) An aqueous dispersion-type acrylic adhesive composition of core-shell structured acrylic copolymer particles dispersed in an aqueous medium, the particles containing core layer (A) containing acrylic polymer (A) and shell layer (B) containing acrylic polymer (B), wherein the acrylic polymer (B) has a glass transition temperature of not less than 30°C and the acrylic polymer (A) has a glass transition temperature lower than that of the acrylic polymer (B).

EP 3 508 542 A1

**Description**

[Technical Field]

The present invention relates to an aqueous dispersion-type acrylic adhesive composition, and an adhesive sheet having an adhesive layer formed from the adhesive composition.

[Background Art]

Generally, pressure-sensitive adhesives have the properties of exhibiting a soft solid (viscoelastic) state in a temperature range around room temperature and adhering easily to an adherend by pressure. Utilizing such properties, adhesives are widely used in various fields in the form of, for example, an adhesive sheet having an adhesive layer formed in a film. A representative method for forming an adhesive layer is exemplified by a method including applying an adhesive composition containing an adhesive component in a liquid medium to a suitable surface and drying same. In recent years, from the viewpoint of environmental hygiene and the like, an aqueous dispersion-type adhesive composition in which adhesive particles are dispersed in an aqueous medium tends to be preferred as compared with a solvent-based adhesive composition in a form in which an adhesive component is dissolved in an organic solvent. As such aqueous dispersion-type adhesive composition, for example, a aqueous dispersion-type adhesive composition in which core-shell structured (meth)acrylic copolymer particles composed of a core layer and a shell layer covering the core layer are dispersed in an aqueous medium is known (patent documents 1, 2).

[Document List]

[Patent documents]

patent document 1: JP-A-2015-96579
patent document 2: JP-A-2015-218283

[SUMMARY OF THE INVENTION]

[Problems to be Solved by the Invention]

Generally, since acrylic adhesives have a strong tackiness, once it contacts an adherend, a high adhesive force is expressed. Therefore, it is difficult for an adhesive sheet having an adhesive layer formed of an acrylic adhesive to be positioned with respect to an adherend in a state of being in contact with the adherend or readhered (reworked) thereto. In general, acrylic adhesives have a higher adhesive force to metals such as stainless steel (SUS) having higher polarity than plastics such as acrylic resin and polypropylene (PP) . Therefore, it is difficult, for example, to selectively adhere an adherend to a plastic part of a composite material of a metal such as SUS and a plastic (that is, a material having a metal region (part) such as SUS and a plastic region (part) such as SUS on the surface).
Therefore, the problem to be solved by the present invention is to provide a novel acrylic adhesive composition capable of forming an adhesive layer (an adhesive sheet) that does not easily express an adhesive force to an adherend by simply touching the adherend, shows low frictional property enabling the layer to be moved even in a state of being in contact with the adherend, and can be readhered (reworked) to the adherend.
The problem is also to provide a novel acrylic adhesive composition that can selectively adhere to a plastic region (part) of an adherend composed of a composite material of a metal such as SUS and a plastic.

[Means of Solving the Problems]

The present inventors have conducted intensive studies in an attempt to solve the aforementioned problems and found that, in an aqueous dispersion-type acrylic adhesive composition containing core-shell structured acrylic copolymer particles as dispersoid, when the glass transition temperature of acrylic polymer (B) forming shell layer (B) and the glass transition temperature of acrylic polymer (A) forming core layer (A) in the core-shell structured acrylic copolymer particles are in a particular relationship, an adhesive layer made of a solidified product of the aqueous dispersion-type acrylic adhesive composition shows a weak tackiness and does not express an adhesive force by lightly touching an adherend, and that the adhesive layer can adhere to plastics with a higher adhesive force by pressing than to a metal such as SUS. Based on such findings, they have conducted further studies and completed the present invention. Accordingly, the characteristics of the present invention are as described below.

[1] An aqueous dispersion-type acrylic adhesive composition of core-shell structured acrylic copolymer particles dispersed in an aqueous medium, the particles comprising core layer (A) comprising acrylic polymer (A) and shell layer (B) comprising acrylic polymer (B), wherein
the aforementioned acrylic polymer (B) has a glass transition temperature of not less than 30°C and the aforementioned acrylic polymer (A) has a glass transition temperature lower than that of the aforementioned acrylic polymer (B).
[2] The aqueous dispersion-type acrylic adhesive composition of the above-mentioned [1], wherein the glass transition temperature of the aforementioned acrylic polymer (A) is less than 0°C.
[3] The aqueous dispersion-type acrylic adhesive composition of the above-mentioned [1] or [2], wherein the glass transition temperature of the aforementioned acrylic polymer (B) is not less than 35°C.
[4] The aqueous dispersion-type acrylic adhesive composition of any one of the above-mentioned [1] to [3], wherein the glass transition temperature of the aforementioned acrylic polymer (A) is not more than -55°C.
[5] The aqueous dispersion-type acrylic adhesive composition of any one of the above-mentioned [1] to [4], wherein a content ratio of acrylic polymer (A) and acrylic polymer (B) ((A)/(B)) in the aforementioned core-shell structured acrylic copolymer particles is 50/50 - 90/10 (weight ratio).
[6] The aqueous dispersion-type acrylic adhesive composition of any one of the above-mentioned [1] to [4], wherein a content ratio of acrylic polymer (A) and acrylic polymer (B) ((A)/(B)) in the aforementioned core-shell structured acrylic copolymer particles is 60/40 - 80/20 (weight ratio).
[7] The aqueous dispersion-type acrylic adhesive composition of any one of the above-mentioned [1] to [6], wherein the aforementioned core-shell structured acrylic polymer particles have a number-average particle size of 100 - 400 nm and a monomodal particle size distribution.
[8] The aqueous dispersion-type acrylic adhesive composition of any one of the above-mentioned [1] to [7], wherein the aforementioned acrylic polymer (B) comprises methyl methacrylate as a monomer unit.
[9] The aqueous dispersion-type acrylic adhesive composition of the above-mentioned [8], wherein the aforementioned acrylic polymer (B) comprises a carboxy group-containing monomer as a monomer unit.
[10] The aqueous dispersion-type acrylic adhesive composition of any one of the above-mentioned [1] to [9], wherein the aforementioned acrylic polymer (A) comprises $C_{1-10}$ alkyl acrylate as a monomer unit.
[11] The aqueous dispersion-type acrylic adhesive composition of any one of the above-mentioned [1] to [10], wherein the adhesive composition is a dispersion of a core-shell structured acrylic copolymer particle obtained by emulsion polymerization using a reactive surfactant in an aqueous medium in the emulsion polymerization.
[12] An adhesive sheet having an adhesive layer formed from the aqueous dispersion-type acrylic adhesive composition of any one of the above-mentioned [1] to [11].

[Effect of the Invention]

An adhesive layer (an adhesive sheet) formed from the aqueous dispersion-type acrylic adhesive composition of the present invention does not express a high adhesive force adherend by merely contacting the adherend and shows a frictional property that enables the adhesive layer to move even in contact with the adherend. Thus, the adhesive layer can be easily moved even in contact with an adherend and can be positioned with respect to the adherend while in contact with the adherend. In addition, since the adhesive layer does not express a high adhesive force to the adherend only by touching same, it can be readhered (reworked) to the adherend.
In addition, an adhesive layer (an adhesive sheet) formed from the aqueous dispersion-type acrylic adhesive composition of the present invention can be selectively adhered with a high adhesive force to a plastic region (part) of an adherend made of a composite material composed of plastic and a metal material such as SUS.

[Brief Description of the Drawings]

Fig. 1 is a sectional drawing schematically showing one configuration example of an adhesive sheet.
Fig. 2 is a sectional drawing schematically showing another configuration example of an adhesive sheet.
Fig. 3 is a sectional drawing schematically showing another configuration example of an adhesive sheet.
Fig. 4 is a sectional drawing schematically showing another configuration example of an adhesive sheet.
Fig. 5 is a sectional drawing schematically showing another configuration example of an adhesive sheet.
Fig. 6 is a sectional drawing schematically showing another configuration example of an adhesive sheet.
Fig. 7 is an explanatory drawing showing a method of practicing a frictional force measurement test.

[Description of Embodiments]

The present invention is explained in more detail in the following by referring to preferable embodiments.

In the present specification, a numerical range defined using a symbol "-" includes the numerical values at both ends (upper limit and lower limit) of "-". For example, "0.01 - 5" shows 0.01 or more and 5 or less. In the present specification, "(meth)acrylic" means both "acrylic" and "methacrylic", and "(meth)acrylate" means both "acrylate" and "methacrylate". An "aqueous dispersion" means a dispersion in which a dispersion medium is an aqueous medium. In addition, "$C_{x-y}$" means the range of the number of carbon atoms, and the carbon number is not less than x and not more than y. The "$C_{x-y}$ alkyl (meth)acrylate" means "alkyl (meth)acrylate wherein the alkyl group has x - y carbon atoms".

<Aqueous dispersion-type acrylic adhesive composition>

The aqueous dispersion-type acrylic adhesive composition of the present invention (hereinafter sometimes to be simply referred to as "the adhesive composition") is an aqueous dispersion-type acrylic adhesive composition of core-shell structured acrylic copolymer particles dispersed in an aqueous medium, the particles comprising core layer (A) comprising acrylic polymer (A) and shell layer (B) comprising acrylic polymer (B), wherein the aforementioned acrylic polymer (B) has a glass transition temperature of not less than 30°C and the aforementioned acrylic polymer (A) has a glass transition temperature lower than that of the aforementioned acrylic polymer (B).

The acrylic polymer (B) having a glass transition temperature of not less than 30°C to be the shell layer (B) of the core-shell structured acrylic copolymer particles in the aqueous dispersion-type acrylic adhesive composition is preferably acrylic copolymer (B1) having methyl methacrylate as the main monomer unit. Specifically, acrylic copolymer (B1-1) containing methyl methacrylate and a carboxy group-containing monomer as monomer units, acrylic copolymer (B1-2) containing methyl methacrylate, a carboxy group-containing monomer and $C_{2-14}$ alkyl (meth)acrylate as monomer units and the like can be mentioned.

The carboxy group-containing monomer is not particularly limited and, for example, (meth)acrylic acid, carboxyethyl (meth)acrylate, carboxypentyl (meth)acrylate, itaconic acid, maleic acid, fumaric acid and crotonic acid can be mentioned. Among these, acrylic acid and/or methacrylic acid are/is preferable, and a combined use of acrylic acid and methacrylic acid is more preferable. When acrylic acid and methacrylic acid are used in combination, the quantitative ratio thereof is not particularly limited and they are preferably used in approximately the same amount. In addition, one or more kinds of the carboxy group-containing monomers can be used.

In the $C_{2-14}$ alkyl (meth)acrylate, the alkyl group having 2 - 14 carbon atoms may be a linear or branched chain. Examples thereof include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl(meth)acrylate, hexyl (meth)acrylate, heptyl (meth)acrylate, octyl (meth)acrylate, cyclohexyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate. Such $C_{2-14}$ alkyl (meth)acrylate is preferably $C_{2-12}$ alkyl acrylate, more preferably $C_{4-8}$ alkyl acrylate, particularly preferably n-butyl acrylate.

The acrylic copolymer (B1) preferably contains 50 - 99 wt%, more preferably 60 - 90 wt%, particularly preferably 60 - 70 wt%, of methyl methacrylate in the total monomer unit.

The composition of acrylic copolymer (B1-1) containing methyl methacrylate and carboxy group-containing monomer as monomer units preferably shows methyl methacrylate:carboxy group-containing monomer (weight ratio) of 80 - 99:20 - 1, more preferably 80 - 95:20 - 5, particularly preferably 85 - 95:15 - 5. The composition of acrylic copolymer (B1-2) containing methyl methacrylate, a carboxy group-containing monomer and $C_{2-14}$ alkyl (meth)acrylate as monomer units preferably shows methyl methacrylate:carboxy group-containing monomer:$C_{2-14}$ alkyl (meth)acrylate (weight ratio) of 50 - 98:1 - 20:1 - 30 (total weight of 3 components is 100), more preferably 60 - 90:5 - 20:5 - 20 (total weight of 3 components is 100).

The acrylic copolymers (B1) and (B1-1) can each contain $C_{2-18}$ alkyl methacrylate and a hydroxy group-containing monomer as monomer units at not more than 10 wt% in the total monomer unit. In addition, acrylic copolymer (B1-2) can contain $C_{15-18}$ alkyl methacrylate and a hydroxy group-containing monomer as monomer units at not more than 10 wt% in the total monomer unit.

Examples of the hydroxy group-containing monomer include hydroxyethyl (meth)acrylate, hydroxybutyl (meth)acrylate, hydroxyhexyl (meth)acrylate, hydroxyoctyl (meth)acrylate, hydroxydecyl (meth)acrylate, hydroxylauryl (meth)acrylate, and (4-hydroxymethylcyclohexyl)methyl methacrylate.

In the present invention, the glass transition temperature (°C) of the acrylic polymer (B) having a glass transition temperature of not less than 30°C is obtained by converting the theoretical glass transition temperature (K), which is calculated from the monomer unit constituting acrylic polymer (B) and its ratio by the following FOX formula, to Celsius degrees (°C) .

$$\text{FOX formula: } 1/Tg = W_1/Tg_1 + W_2/Tg_2 + \ldots + W_n/Tg_n$$

(Tg: glass transition temperature (K) of polymer, $Tg_1$, $Tg_2$, ..., $Tg_n$: glass transition temperature (K) of homopolymer of each monomer, $W_1$, $W_2$, ..., $W_n$: weight fraction of each monomer)

The theoretical glass transition temperature (converted to Celsius degree (°C)) determined by the above-mentioned FOX formula matches well with the actual measured glass transition temperature determined by differential scanning calorimetry (DSC), dynamic viscoelasticity and the like.

When acrylic polymer (B) forming shell layer (B) of core-shell structured acrylic copolymer particles has a glass transition temperature of not less than 30°C, a solidified product (an adhesive layer) of the aqueous dispersion-type acrylic adhesive composition shows a weak tackiness and an adhesive force does not express easily by a light touch with an adherend. The glass transition temperature of the acrylic polymer (B) is preferably not less than 35°C, more preferably not less than 38°C, particularly preferably not less than 55°C. The upper limit of the glass transition temperature of the acrylic polymer (B) is not particularly limited. When the glass transition temperature is too high, the adhesiveness of a solidified product (an adhesive layer) of the aqueous dispersion-type acrylic adhesive composition to an adherend tends to decrease, and therefore, the glass transition temperature of the acrylic polymer (B) is preferably not more than 110°C, more preferably not more than 80°C, particularly preferably not more than 60°C.

The acrylic polymer (A) forming core layer (A) of the core-shell structured acrylic copolymer particles is an acrylic polymer having a lower glass transition temperature than that of acrylic polymer (B). The "glass transition temperature of acrylic polymer (A)" here is obtained by converting the theoretical glass transition temperature (K), which is calculated from the monomer unit constituting acrylic polymer (A) and its ratio by the aforementioned FOX formula, to Celsius degrees (°C). Preferable examples of the acrylic polymer (A) include a homopolymer and copolymers containing one or more kinds selected from $C_{1-14}$ alkyl (meth)acrylates as a main monomer unit and having a glass transition temperature (converted to Celsius degree (°C)) calculated from the aforementioned FOX formula, which is lower than the glass transition temperature of acrylic polymer (B).

Examples of the $C_{1-14}$ alkyl (meth)acrylate include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, cyclohexyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate and tetradecyl (meth)acrylate.

The $C_{1-14}$ alkyl (meth) acrylate is preferably $C_{1-14}$ alkyl acrylate, more preferably $C_{1-10}$ alkyl acrylate, further preferably $C_{2-8}$ alkyl acrylate, particularly preferably $C_{4-8}$ alkyl acrylate.

A homopolymer or copolymer having the main monomer unit composed of one or more kinds selected from $C_{1-14}$ alkyl (meth)acrylates and having a glass transition temperature lower than that of acrylic polymer (B) may further contain a carboxy group-containing monomer and a hydroxy group-containing monomer as monomer units. Specific examples of the "carboxy group-containing monomer" and "hydroxy group-containing monomer" include those exemplified as the monomer units of the aforementioned acrylic polymer (B).

The glass transition temperature of the acrylic polymer (A) forming core layer (A) is preferably less than 0°C, more preferably not more than -50°C. When the glass transition temperature of the acrylic polymer (A) forming core layer (A) is less than 0°C, the adhesive force to plastics such as acrylic resin and polypropylene (PP) of a solidified product (an adhesive layer) of the aqueous dispersion-type acrylic adhesive composition is improved. The lower limit of the glass transition temperature of acrylic polymer (A) is not particularly set; however, to make polymerization progress well in an aqueous medium, the glass transition temperature of acrylic polymer (A) is preferably not less than -80°C which encompasses a polymer containing $C_{1-10}$ alkyl acrylate ester as a monomer unit.

Specific examples of the preferable acrylic polymer (A) include a homopolymer of n-butyl acrylate (BA), a homopolymer of n-hexyl acrylate (HA), a homopolymer of 2-ethylhexyl acrylate (2HEA), and a copolymer containing two or more kinds selected from BA, HA and 2EHA as monomer units.

The content ratio of acrylic polymer (A) and acrylic polymer (B) ((A)/(B)) in core-shell structured acrylic copolymer particles is preferably 50/50 - 90/10 (weight ratio), more preferably 60/40 - 90/10, particularly preferably 70/30 - 85/15. When the content ratio of acrylic polymer (A) and acrylic polymer (B) ((A)/(B)) exceeds such preferable range and the proportion of acrylic polymer (A) is high, selective adhesiveness of a solidified product (an adhesive layer) of the aqueous dispersion-type acrylic adhesive composition to plastic tends to decrease, as well as a frictional force of a solidified product (an adhesive layer) of the aqueous dispersion-type acrylic adhesive composition on an adherend tends to increase. On the other hand, when the proportion of acrylic polymer (B) is high, a frictional force of a solidified product (an adhesive layer) of the aqueous dispersion-type acrylic adhesive composition on an adherend tends to decrease and adhesiveness to an adherend of plastic and various materials other than plastic tends to decrease.

In the aqueous dispersion-type acrylic adhesive composition of the present invention, the number-average particle size of the core-shell structured acrylic polymer particles as dispersoid is preferably 100 - 400 nm, more preferably 140 - 320 nm. When the number-average particle size is less than 100 nm, generally, the amount of the surfactant used increases, due to which an adhesive force of a solidified product (an adhesive layer) of the aqueous dispersion-type acrylic adhesive composition tends to decrease. When the number-average particle size exceeds 400 nm, particles in which a shell layer cannot cover the core layer increases, and therefore, a frictional force of a solidified product (an adhesive layer) of the aqueous dispersion-type acrylic adhesive composition on an adherend tends to become high and selective adhesiveness to plastic tends to decrease.

When the number-average particle size satisfies the above-mentioned preferable range and the particle size distribution of core-shell structured acrylic polymer particles is monomodal, an adhesive layer permitting positioning with respect to an object adherend while in contact with the adherend and readhering to an adherend (rework), and an adhesive layer superior in selective adhesiveness to plastic can be obtained more stably. The monomodal particle size distribution of the core-shell structured acrylic polymer particles here means that the number of peak in the particle size distribution is one.

The core-shell structured acrylic copolymer particles preferably have a sol weight-average molecular weight (Mw) of $1.0 \times 10^4$ - $8.0 \times 10^5$, more preferably $1.0 \times 10^5$ - $5.0 \times 10^5$, particularly preferably $1.9 \times 10^5$ - $3.0 \times 10^5$. When the sol weight-average molecular weight (Mw) is less than $1.0 \times 10^4$, the frictional force becomes high, an adhesive residue tends to easily develop upon detachment. When the weight-average molecular weight (Mw) exceeds $8.0 \times 10^5$, adhesiveness tends to not easily express even with pressurization.

The sol weight-average molecular weight (Mw) refers to a weight-average molecular weight (Mw) of a sol part in the core-shell structured acrylic copolymer particles. It is measured by converting the soluble matter of core-shell structured acrylic copolymer particles in ethyl acetate to polystyrene by the GPC (Gel Permeation Chromatography) method. To be specific, it is measured under the conditions of a tetrahydrofuran solvent at a flow rate of 0.5 ml/min by using two "TSKgelGMH-H(20)" columns connected to liquid chromatograph "HPLC8020" manufactured by Tosoh Corporation.

The aqueous dispersion-type acrylic adhesive composition of the present invention can be obtained by multistep emulsion polymerization in which emulsion polymerization to form a polymer to be the core of core-shell structured acrylic copolymer particles is conducted, and emulsion polymerization to form a polymer to be the shell is conducted in the presence of the obtained polymer to be the core. Each emulsion polymerization can be conducted by a conventional method. That is, an emulsifier (surfactant), a radical polymerization initiator, a chain transfer agent where necessary and the like are appropriately added together with a monomer to be a monomer unit of a polymer to be the core, and the mixture is subjected to emulsion polymerization by a known emulsion polymerization method such as simultaneous charging method (simultaneous polymerization method), monomer dropping method, monomer emulsion dropping method and the like, after which an emulsifier (surfactant), a radical polymerization initiator, a chain transfer agent where necessary and the like are appropriately added together with a monomer to be a monomer unit of a polymer to be the shell, and the mixture is subjected to emulsion polymerization by a known emulsion polymerization method such as simultaneous charging method (simultaneous polymerization method), monomer dropping method, monomer emulsion dropping method and the like. In the monomer dropping method, continuous dropping or separate dropping is appropriately selected. The reaction conditions of emulsion polymerization to obtain a polymer to be the core and the reaction conditions of emulsion polymerization to obtain a polymer to be the shell are each appropriately selected. In any emulsion polymerization, the polymerization temperature is, for example, preferably about 40 - 95°C and the polymerization time is preferably about 30 min - 24 hr.

As the above-mentioned emulsifier, for example, various non-reactive surfactants generally used for emulsion polymerization are used. As the non-reactive surfactant, for example, an anionic non-reactive surfactant or a nonionic non-reactive surfactant is used. Specific examples of the anionic non-reactive surfactant include higher fatty acid salts such as sodium oleate and the like; alkylaryl sulfonates such as sodium dodecylbenzenesulfonate and the like; alkyl sulfate salts such as sodium lauryl sulfate, lauryl ammonium sulfate and the like; polyoxyethylene alkyl ether sulfate salts such as sodium polyoxyethylene lauryl ether sulfate and the like; polyoxyethylene alkylaryl ether sulfate salts such as sodium polyoxyethylene nonylphenyl ether sulfate and the like; alkyl sulfosuccinate salts such as sodium monooctyl sulfosuccinate, sodium dioctyl sulfosuccinate, sodium polyoxyethylene lauryl sulfosuccinate and the like, and a derivative thereof; polyoxyethylene distyrenated phenyl ether sulfate salts and the like. Specific examples of the nonionic non-reactive surfactant include polyoxyethylene alkyl ethers such as polyoxyethylene lauryl ether, polyoxyethylene stearyl ether and the like; polyoxyethylene alkylphenyl ethers such as polyoxyethylene octylphenyl ether, polyoxyethylene nonylphenyl ether and the like; sorbitan higher fatty acid esters such as sorbitan monolaurate, sorbitan monostearate, sorbitan trioleate and the like; sorbitan polyoxyethylene higher fatty acid esters such as polyoxyethylene sorbitan monolaurate and the like; polyoxyethylene higher fatty acid esters such as polyoxyethylene monolaurate, polyoxyethylene monostearate and the like; glycerol higher fatty acid esters such as oleic acid monoglyceride, stearic acid monoglyceride and the like; polyoxyethylene-polyoxypropylene block copolymer, polyoxyethylene distyrenated phenylether and the like.

Besides the above-mentioned non-reactive surfactants, a reactive surfactant having an ethylenic unsaturated double bond (radical polymerizable functional group) can be used as the surfactant. As the reactive surfactant, an anionic reactive surfactant in which a radical polymerizable functional group such as a propenyl group and an allyl ether group is introduced into the aforementioned anionic non-reactive surfactant, a nonionic reactive surfactant in which a radical polymerizable functional group such as a propenyl group and an allyl ether group is introduced into the aforementioned nonionic non-reactive surfactant and the like can be mentioned.

Specific examples of the anionic reactive surfactant include alkyl ether-based one (examples of the commercially available product include AQUALON KH-05, KH-10, KH-20 manufactured by DKS Co. Ltd., ADEKA REASOAP SR-10N, SR-20N manufactured by ADEKA Corporation, LATEMUL PD-104 manufactured by Kao Corporation); sulfosuccinic acid ester-based one (examples of the commercially available product include LATEMUL S-120, S-120A, S-180P, S-180A manufactured by Kao Corporation, ELEMINOL JS-20 manufactured by Sanyo Chemical Industries, Ltd.); alkylphenyl ether-based one or alkylphenyl ester-based one (examples of the commercially available product include AQUALON H-2855A, H-3855B, H-3855C, H-3856, HS-05, HS-10, HS-20, HS-30, HS-1025, BC-05, BC-10, BC-20 manufactured by DKS Co. Ltd., ADEKA REASOAP SDX-222, SDX-223, SDX-232, SDX-233, SDX-259, SE-10N, SE-20N manufactured by ADEKA Corporation); (meth)acrylate sulfuric acid ester-based one (examples of the commercially available product include Antox MS-60, MS-2N manufactured by NIPPON NYUKAZAI CO., LTD., ELEMINOL RS-30 manufactured by Sanyo Chemical Industries, Ltd.); phosphate-based one (examples of the commercially available product include H-3330PL manufactured by DKS Co. Ltd., ADEKA REASOAP PP-70 manufactured by ADEKA Corporation). Examples of the nonionic reactive surfactant include alkyl ether-based one (examples of the commercially available product include ADEKA REASOAP ER-10, ER-20, ER-30, ER-40 manufactured by ADEKA Corporation, LATEMUL PD-420, PD-430, PD-450 manufactured by Kao Corporation); alkylphenyl ether-based one or alkylphenyl ester-based one (examples of the commercially available product include AQUALON RN-10, RN-20, RN-30, RN-50 manufactured by DKS Co. Ltd., ADEKA REASOAP NE-10, NE-20, NE-30, NE-40 manufactured by ADEKA Corporation); (meth)acrylate sulfuric acid ester-based one (examples of the commercially available product include RMA-564, RMA-568, RMA-1114 manufactured by NIPPON NYUKAZAI CO., LTD.).

The emulsifier is preferably a reactive surfactant, more preferably an anionic reactive surfactant, particularly preferably an alkylphenyl ether-based or alkylphenyl ester-based reactive surfactant.

One or more kinds of emulsifiers can be used.

The above-mentioned radical polymerization initiator is not particularly limited, and known radical polymerization initiators generally used for emulsion polymerization are used. Examples thereof include azo-based initiators such as 2,2'-azobisisobutyronitrile (AIBN), 2,2'-azobis(2-methylpropionamidine)disulfate, 2,2'-azobis(2-methylpropionamidine)dihydrochloride, 2,2'-azobis(2-amidinopropane)dihydrochloride, 2,2'-azobis[2-(2-imidazolin-2-yl)propane]dihydrochloride and the like; persulfate-based initiators such as potassium persulfate, ammonium persulfate and the like; peroxide-based initiators such as benzoyl peroxide, t-butyl hydroperoxide, hydrogen peroxide and the like; substituted ethane-based initiators such as phenyl-substituted ethane and the like; carbonyl initiators such as aromatic carbonyl compound and the like. These polymerization initiators are appropriately used alone or in combination. When performing emulsion polymerization, a redox initiator using a reducing agent together with a polymerization initiator on demand can be used. In this way, the emulsion polymerization rate may be promoted easily or emulsion polymerization may be performed easily at a low temperature. Examples of the reducing agent include reducible organic compounds such as ascorbic acid, erythorobic acid, tartaric acid, citric acid, glucose, metal salt of formaldehyde sulfoxylate, and the like; reducible inorganic compounds such as sodium thiosulfate, sodium sulfite, sodium bisulfite, sodium metabisulfite and the like; ferrous chloride, rongalit; thioureadioxide and the like.

The composition of the monomer emulsion in the emulsion polymerization for obtaining the aqueous dispersion-type acrylic adhesive composition of the present invention preferably contains 0.1 - 10 parts by weight (preferably 1 - 5 parts by weight) of a surfactant, and 100 - 400 parts by weight (preferably 100 - 300 parts by weight) of water, each per 100 parts by weight of the monomer. The amount of the "surfactant" or "water" as used herein means the total of the amount charged in the monomer emulsion to be dropped and the amount charged in the polymerization reaction vessel, when emulsion polymerization is a monomer emulsion dropping method.

It is preferable to adjust pH of the aqueous dispersion-type acrylic adhesive composition obtained by emulsion polymerization to about 7.0 - 9.0 by adding, for example, alkali such as aqueous ammonia or the like to improve the coating (application) property of the aqueous dispersion type acrylic adhesive composition when forming an adhesive layer by coating (applying) the aqueous dispersion type acrylic adhesive composition on the substrate.

In addition, the aqueous dispersion-type acrylic adhesive composition may contain, where necessary, general crosslinking agents, for example, a crosslinking agent selected from carbodiimide-based crosslinking agents, hydrazine-based crosslinking agents, epoxide-based crosslinking agents, isocyanate-based crosslinking agents, oxazoline-based crosslinking agents, aziridine-based crosslinking agents, metal chelate-based crosslinking agents, silane coupling agents and the like. Where necessary, moreover, one or more kinds of conventionally-known tackifiers or emulsions thereof may be supplementarily added. Examples of the conventionally-known tackifier include rosin-based resin, rosin derivative resin (polymerized rosin ester etc.), petroleum resin, terpene-based resin, phenol-based resin, ketone-based resin and the like. However, it is preferable that the aqueous dispersion-type acrylic adhesive composition of the present invention is substantially free of a crosslinking agent.

<Adhesive sheet>

The present invention also provides an adhesive sheet having an adhesive layer formed from the above-mentioned aqueous dispersion-type acrylic adhesive composition. It may be an adhesive sheet with a substrate in the form where an adhesive layer is formed on one surface or both surfaces of a support, or a substrate-less adhesive sheet in the form where an adhesive layer is maintained on a release liner. The concept of the adhesive sheet here may include those referred to as adhesive tape, adhesive label, adhesive film and the like. While the above-mentioned adhesive layer can typically be formed continuously, it is not limited to such form and may be an adhesive layer formed in a regular or random pattern such as dot-like pattern, stripe-like pattern or the like. The adhesive sheet provided by the present invention may be roll-like or sheet-like. Alternatively, it may be an adhesive sheet in a form processed in various shapes.

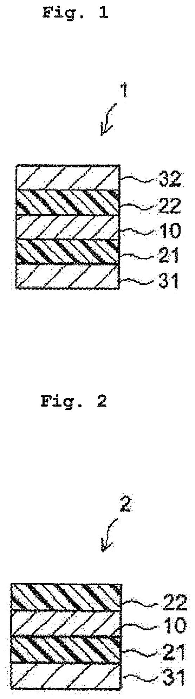

The adhesive sheet disclosed here may have a sectional structure schematically shown in, for example, Fig. 1 - Fig. 6. Among these, Fig. 1 and Fig. 2 are configuration examples of a double-sided adhesive-type adhesive sheet with a substrate. The adhesive sheet 1 shown in Fig. 1 has a constitution in which adhesive layers 21, 22 are formed on respective surfaces (all non-releasable) of support 10, and these adhesive layers are protected by release liners 31 and 32 having release surfaces at least on the adhesive layer side. The adhesive sheet 2 shown in Fig. 2 has a constitution in which adhesive layers 21, 22 are formed on respective surfaces (all non-releasable) of support 10, and one adhesive layer 21 is protected by a release liner 31 having a release surface on both surfaces. This type of adhesive sheet 2 can form a constitution in which an adhesive layer 22 is also protected by the release liner 31 by winding the adhesive sheet such that the other adhesive layer 22 contacts the back face of the release liner 31.

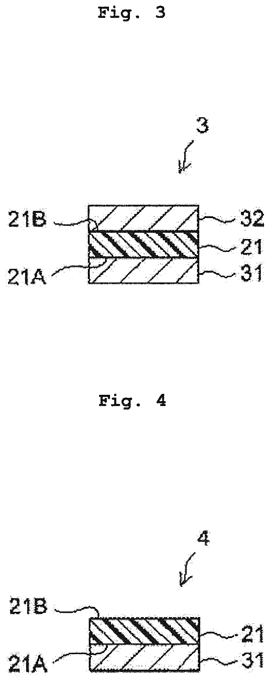

Fig. 3, Fig. 4 are configuration examples of a substrate-less double-sided adhesive sheet. The adhesive sheet 3 shown in Fig. 3 has a constitution in which both surfaces 21A, 21B of a substrate-less adhesive layer 21 are protected by release liners 31 and 32 having release surfaces at least on the adhesive layer side. The adhesive sheet 4 shown in Fig. 4 has a constitution in which one surface (adhesive face) 21A of the substrate-less adhesive layer 21 is protected by a release liner 31 having a release surface on both surfaces. This can have a constitution in which the other surface 21B is also protected by the release liner 31 by winding the adhesive sheet such that the other surface (adhesive face) 21B of the adhesive layer 21 contacts the back face of the release liner 31.

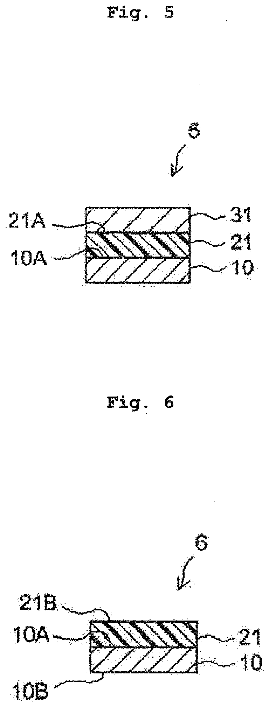

Fig. 5, Fig. 6 are configuration examples of a single-sided adhesive-type adhesive sheet with a substrate. The adhesive sheet 5 shown in Fig. 5 has a constitution in which an adhesive layer 21 is formed on one surface 10A (non-releasable) of support 10, and a surface (adhesive face) 21A of the adhesive layer 21 is protected by a release liner 31 having a release surface at least on the adhesive layer side. The adhesive sheet 6 shown in Fig. 6 has a constitution in which an adhesive layer 21 is formed on one surface 10A (non-releasable) of support 10. The other surface 10B of the support 10 has a release surface, and the surface (adhesive face) 21B of the adhesive layer is protected by the other surface 10B of the support by winding the adhesive sheet 6 such that the adhesive layer 21 contacts the other surface 10B.

In a single-sided adhesive-type or double-sided adhesive-type adhesive sheet with a substrate, resin film, paper, cloth, rubber sheet, foamed sheet, metal foil, complex of these or the like can be used as a support that supports (backs) an adhesive layer. Examples of the resin film include a film made of polyolefin such as polyethylene (PE), polypropylene (PP), ethylene-propylene copolymer or the like; polyester films such as poly(ethylene terephthalate) (PET) and the like; vinyl chloride resin film; vinyl acetate resin film; polyimide resin film; polyamide resin film; fluorine resin film; cellophan and the like. Examples of the paper include Japanese paper, craft paper, glassine, quality paper, synthesis paper, topcoat paper and the like. Examples of the cloth include woven fabrics and nonwoven fabrics made of various fibrous materials alone or a blend thereof. The resin film as used herein is typically a non-porous resin sheet, which is a concept distinguished from, for example, a non-woven fabric (that is, not including non-woven fabric). The above-mentioned resin film may be any of non-oriented film, uniaxial oriented film, biaxially oriented film. The surface of the support on which the adhesive layer is formed may be subjected to a surface treatment such as application of an undercoat, corona discharge treatment, plasma treatment or the like.

The thickness of the support is not particularly limited, and can be appropriately selected according to the object. It is generally 10 - 500 $\mu$m, preferably 10 - 200 $\mu$m. From the aspect of repulsion resistance, for example, a support having a thickness of 10 - 50 $\mu$m can be preferably adopted.

The thickness of the adhesive layer is not particularly limited, and can be appropriately selected according to the object. From the aspects of film formation, appearance, not less than 5 $\mu$m is preferable, not less than 10 $\mu$m is more preferable, not more than 200 $\mu$m is preferable, not more than 100 $\mu$m is more preferable. The thickness of the adhesive layer in the case of a double-sided adhesive-type adhesive sheet with a substrate means the thickness of each adhesive layer formed on both surfaces of the support.

A method for forming an adhesive layer is not particularly limited, and a known or conventionally-used method can be employed. For example, a method in which an aqueous dispersion-type acrylic adhesive composition is applied directly to a releasable or non-releasable substrate and the substrate is heated and dried (direct method); a method in which an aqueous dispersion-type acrylic adhesive composition is applied to a surface having releaseability and the surface is heated and dried to form an adhesive layer on the surface, after which the adhesive layer is transferred by adhering same to a non-releasable substrate (transfer method); or the like can be appropriately adopted. An aqueous dispersion-type acrylic adhesive composition can be applied using a conventionally-used coater such as gravure roll coater, reverse roll coater, kiss roll coater, dip roll coater, bar coater, knife coater, spray coater or the like. The temperature for drying by heating is preferably 40°C - 200°C, further preferably 50°C - 180°C, particularly preferably 70°C - 120°C. As the drying time, a suitable time may be adopted as appropriate. The above-mentioned drying time is preferably 5 sec - 20 min, further preferably 5 sec - 10 min, particularly preferably 10 sec - 5 min.

The release liner is not particularly limited, and conventionally-used release paper and the like can be used. For example, a release liner having a release-treated layer on the surface of a substrate such as plastic film, paper or the like, a release liner made from a low-adherent material such as a fluorinated polymer (polytetrafluoroethylene etc.) and a polyolefin-based resin (polyethylene, polypropylene etc.) and the like can be used. The above-mentioned release-treated layer may be formed by surface treating the above-mentioned substrate with a release agent such as silicone-based one, long chain alkyl-based one, fluorinated one, molybdenum sulfide or the like.

In the present invention, as a coating solution containing a release agent used when forming a release-treated layer, an organic solvent is generally used to improve coating property. The organic solvent is not particularly limited and, for example, aliphatic or alicyclic hydrocarbon solvents such as cyclohexane, hexane, heptane and the like; aromatic hydrocarbon solvents such as toluene, xylene and the like; ester solvents such as ethyl acetate, methyl acetate and the like; ketone solvents such as acetone, methyl ethyl ketone and the like; alcohol solvents such as methanol, ethanol, butanol and the like, and the like can be used. These organic solvents may be used alone or a mixture of two or more kinds thereof may be used.

The thickness of the release treatment layer is preferably 0.001 - 10 $\mu$m, more preferably 0.03 - 5 $\mu$m, particularly preferably 0.1 - 1 $\mu$m, from the aspects of superior release property and suppression of uneven thickness.

[Example]

While the present invention is more specifically described by illustrating Examples, the present invention is not limited by the following Examples. It is of course possible to practice the invention by making appropriate modifications within the range compatible with the above and the following gist, all of which are encompassed in the technical scope of the present invention

[Example 1]

(Preparation of monomer emulsion (A))

2-Ethylhexyl acrylate (2EHA) (100 parts by weight), anionic reactive surfactant AQUALON HS-1025 (manufactured by DKS Co. Ltd.) (1.5 parts by weight) (solid content), and ion-exchanged water (82 parts by weight) as materials were placed in a container and they were stirred using a homomixer (manufactured by Tokushu Kika Kogyo Co., Ltd.) under a nitrogen atmosphere for 5 min at 6000 rpm to prepare monomer emulsion (A) .

(Preparation of monomer emulsion (B))

Methyl methacrylate (MMA) (90 parts by weight), acrylic acid (AA) (5 parts by weight), methacrylic acid (MAA) (5 parts by weight), anionic reactive surfactant AQUALON HS-1025 (manufactured by DKS Co. Ltd.) (1.5 parts by weight) (solid content), and ion-exchanged water (82 parts by weight) as materials were placed in a container and they were stirred using a homomixer (manufactured by Tokushu Kika Kogyo Co., Ltd.) under a nitrogen atmosphere for 5 min at 6000 rpm to prepare monomer emulsion (B).

(Production of core-shell structured acrylic copolymer particles)

In a reaction container provided with a condenser tube, a nitrogen inlet tube, a thermometer, a dropping device, and a stirring blade were placed an anionic reactive surfactant AQUALON HS-1025 (manufactured by DKS Co. Ltd.) (0.5 parts by weight, solid content) and ion-exchanged water (76.8 parts by weight), and the mixture was sufficiently purged with nitrogen while stirring and heated to 60°C. After confirmation that the mixture became constant at 60°C, a water-soluble azo polymerization initiator VA-057 (manufactured by Wako Pure Chemical Industries, Ltd., compound name: 2,2'-azobis[N-(2-carboxyethyl)-2-methylpropionamidine]hydrate) (0.05 parts by weight) was added and, 10 min later, monomer emulsion (A) (150.6 parts by weight) was added dropwise over 2.5 hr to give a copolymer to be the core layer (A). Then, VA-057 (0.05 parts by weight) was further added and, 10 min later, monomer emulsion (B) (37.6 parts by weight) was added dropwise over 45 min to form a copolymer to be the shell layer (B), whereby core-shell structured acrylic copolymer particles were produced. The number-average particle size of the obtained core-shell structured copolymer particles was 160 nm.

(Preparation of aqueous dispersion-type acrylic adhesive composition)

To the dispersion (100 parts by weight) obtained above in which the core-shell structured acrylic copolymer particles were dispersed in the aqueous medium after emulsion polymerization was added aqueous ammonia at a concentration of 10% (0.18 parts by weight) to adjust to pH7.5, whereby an aqueous dispersion-type adhesive composition containing core-shell structured copolymer particles at a solid content concentration of 38% was obtained.

(Production of adhesive sheet)

The above-mentioned aqueous dispersion-type acrylic adhesive composition was applied to a PET film (PET substrate, trade name: DIAFOIL T-100, manufactured by Mitsubishi Plastics, Inc.) with a die coater such that the thickness after drying was 20 $\mu$m, and dried at 100°C for 3 min to form an adhesive layer. It was covered with a release film (poly(ethylene terephthalate) substrate, trade name: DIAFORM MRF-38, manufactured by Mitsubishi Chemical Polyester) to prepare an adhesive sheet.

The following Table 1 shows an amount ratio (solid content ratio) of the monomer and an anionic reactive surfactant (AQUALON HS-1025) in monomer emulsion (A) used for formation of the polymer for core layer (A), and an amount ratio (solid content ratio) of the monomer and a reactive surfactant (AQUALON HS-1025) in monomer emulsion (B) used for formation of the polymer for shell layer (B). In the Table, "initial charge" of the reactive surfactant (AQUALON HS-1025) means the surfactant added to the reaction container before polymerization.

[Examples 2 - 10, Comparative Examples 1 - 4]

In the same manner as in Example 1 except that the amounts of monomers and the reactive surfactants in monomer emulsion (A) and monomer emulsion (B) were changed to the amounts shown in Table 1, production of core-shell structured acrylic copolymer particles, preparation of aqueous dispersion-type acrylic adhesive compositions, and production of adhesive sheets were conducted. In Examples 5 - 7 and Comparative Example 2, during preparation of the aqueous dispersion-type acrylic adhesive compositions, a polymerized rosin ester-based tackifier ("SUPER ESTER E-865-NT" manufactured by Arakawa Chemical Industries, Ltd.) (10 parts by weight, solid content) was added per 100 parts by weight of the core-shell structured acrylic copolymer particles (solid content) in the dispersion in which core-shell structured acrylic copolymer particles were dispersed in an aqueous medium (dispersion medium) after emulsion polymerization.

[Table 1]

| | initial charge [parts by weight] | core layer (A) [parts by weight] | | | shell layer (B) [parts by weight] | | | | |
|---|---|---|---|---|---|---|---|---|---|
| | HS-1025 (solid content) | BA | 2EHA | HS-1025 (solid content) | MMA | BA | AA | MAA | HS-1025 (solid content) |
| Example 1 | 0.5 | 0 | 100 | 1.5 | 90 | 0 | 5 | 5 | 1.5 |
| Example 2 | 0.5 | 0 | 100 | 1.5 | 80 | 10 | 5 | 5 | 1.5 |
| Example 3 | 0.5 | 0 | 100 | 1.5 | 70 | 20 | 5 | 5 | 1. 5 |
| Example 4 | 0.5 | 0 | 100 | 1.5 | 60 | 30 | 5 | 5 | 1. 5 |
| Example 5 | 0.01 | 0 | 100 | 1.5 | 60 | 30 | 5 | 5 | 1. 5 |
| Example 6 | 0.5 | 0 | 100 | 1.5 | 90 | 0 | 5 | 5 | 1.5 |
| Example 7 | 0.5 | 0 | 100 | 1.5 | 70 | 20 | 5 | 5 | 1. 5 |
| Example 8 | 0.5 | 0 | 100 | 1.5 | 60 | 30 | 5 | 5 | 1. 5 |
| Example 9 | 0.5 | 100 | 0 | 1.5 | 60 | 30 | 5 | 5 | 1. 5 |

(continued)

| | initial charge [parts by weight] | core layer (A) [parts by weight] | | | shell layer (B) [parts by weight] | | | | |
| --- | --- | --- | --- | --- | --- | --- | --- | --- | --- |
| | HS-1025 (solid content) | BA | 2EHA | HS-1025 (solid content) | MMA | BA | AA | MAA | HS-1025 (solid content) |
| Example 10 | 0.5 | 0 | 100 | 1.5 | 60 | 30 | 5 | 5 | 1. 5 |
| Comparative Example 1 | 0.5 | 0 | 100 | 1.5 | 50 | 40 | 5 | 5 | 1. 5 |
| Comparative Example 2 | 0.5 | 0 | 100 | 1.5 | 50 | 40 | 5 | 5 | 1.5 |
| Comparative Example 3 | 0 | 0 | 100 | 1.5 | 60 | 30 | 5 | 5 | 1.5 |
| Comparative Example 4 | 0.5 | 100 | 0 | 1.5 | 45 | 50 | 5 | 0 | 1.5 |

In Table 1, BA is abbreviation of butyl acrylate, 2EHA is abbreviation of 2-ethylhexyl acrylate, MMA is abbreviation of methyl methacrylate, AA is abbreviation of acrylic acid, and MAA is abbreviation of methacrylic acid.

Table 2 provided below shows properties (glass transition temperatures (Tg) of polymer constituting core layer (A) and polymer constituting shell layer (B), content ratio of core layer (A) and shell layer (B), number-average particle size, number of peaks in particle size distribution, sol weight-average molecular weight) of the core-shell structured copolymer particles, the presence or absence of tackifier, and adhesive force and frictional force of the adhesive layer of the adhesive tape on various adherends (SUS, acrylic resin, polypropylene (PP)) with respect to the aqueous dispersion-type acrylic adhesive compositions obtained in Examples 1 - 10 and Comparative Examples 1 - 4.

The glass transition temperature, number-average particle size, adhesive force and frictional force were determined by the following methods.

<Calculation of glass transition temperature>

The glass transition temperature of the copolymers constituting core layer (A) and shell layer (B) of the core-shell structured copolymer particles was obtained by converting, to Celsius degree (°C), the theoretical glass transition temperature (K) calculated by the following FOX formula and using the glass transition temperature Tg (K) of the homopolymer in each monomer shown below.

BA: butyl acrylate = 218K
2EHA: 2-ethylhexyl acrylate = 203K
MMA: methyl methacrylate = 378K
AA: acrylic acid = 379K
MAA: methacrylic acid = 403K

$$\text{FOX formula: } 1/Tg = W_1/Tg_1 + W_2/Tg_2 + \ldots + W_n/Tg_n$$

wherein Tg: glass transition temperature (K) of polymer, $Tg_1, Tg_2, \ldots, Tg_n$: glass transition temperature (K) of homopolymer in each monomer, $W_1, W_2, \ldots, W_n$: weight fraction of each monomer]

<Number-average particle size>

The number-average particle size of the core-shell structured copolymer particles was measured by the following apparatus after diluting an aqueous dispersion-type adhesive composition with distilled water to a solid content concentration of not more than 0.5 wt%. Whether the number of peaks is one or plural was judged from the measured particle size distribution.
apparatus: laser diffraction/scattering particle size distribution analyzer (LS13 320 PIDS mode manufactured by Beckman Coulter, Inc.)
refractive index of dispersoid: 1.48 (poly(n-butyl acrylate) was used)

refractive index of dispersion medium: 1.33

<Adhesive force>

The adhesive tapes obtained in respective Examples and Comparative Examples were cut into width 20 mm and length 150 mm and samples for release force measurement were prepared. A release sheet was peeled off from the samples, an adhesive layer of the samples was pressed against various adherends by one reciprocation of a 2 kg roller under 23°C atmosphere and aged at room temperature for 30 min. Using a peeling tester, a release force upon peeling off the sample was measured at 23°C, peeling angle 180°, peeling rate 300 mm/min.

<Frictional force>

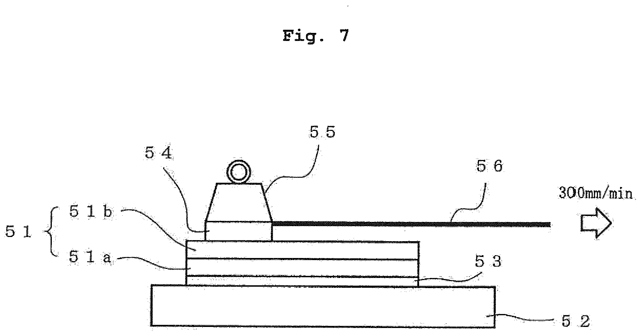

Fig. 7 is a concept diagram of the frictional force measurement test. The adhesive tapes obtained in respective Examples and Comparative Examples were cut into width 30 mm and length 50 mm and samples 51 for frictional force measurement were prepared. 51a is a PET substrate, and 51b is an adhesive layer. A PP board was cut into width 40 mm, length 80 mm and a frictional force measurement base 52 was prepared. To the measurement base 52 was adhered a PET surface (surface of PET substrate 51a) of the measurement sample 51 via a double-sided adhesive tape (manufactured by Nitto Denko Corporation, No. 5000NS double-sided tape) 53, and the release sheet was detached. Then, a 20 mm×20 mm adherend 54 equipped with a guide 56, and 30 g of anchor 55 were placed on the adhesive layer 51b of measurement sample 51, the adherend 54 and the anchor 55 were pulled together in the horizontal direction at 300 mm/min, and the stress applied at that time was measured.

[Table 2]

| | Tg core layer (A) | Tg shell layer (B) | content ratio (weight ratio) (A)/(B) | number-average particle [nm] | peak number in particle size distribution | sol weight-average molecular | presence/absence of tackifier | adhesive force [N/20 mm] SUS | adhesive force [N/20 mm] acrylic | adhesive force [N/20 mm] PP | frictional force [N/cm²] SUS | frictional force [N/cm²] acrylic | frictional force [N/cm²] PP |
|---|---|---|---|---|---|---|---|---|---|---|---|---|---|
| Example 1 | -70°C | 106°C | 80/20 | 160 | one | $2.0\times10^5$ | absent | 0 | 0.1 | 0.1 | 0.06 | 0.09 | 0.23 |
| Example 2 | -70°C | 80°C | 80/20 | 160 | one | $2.1\times10^5$ | absent | 0 | 0.1 | 0.2 | 0.08 | 0.08 | 0.06 |
| Example 3 | -70°C | 58°C | 80/20 | 160 | one | $2.5\times10^5$ | absent | 0 | 0.1 | 0.2 | 0.08 | 0.15 | 0.07 |
| Example 4 | -70°C | 38°C | 80/20 | 160 | one | $2.3\times10^5$ | absent | 0.1 | 0.3 | 0.3 | 0.1 | 0.28 | 0.07 |
| Example 5 | -70°C | 38°C | 80/20 | 320 | one | $1.9\times10^5$ | absent | 0.1 | 0.3 | 0.4 | 0.11 | 0.26 | 0.07 |
| Example 6 | -70°C | 106°C | 80/20 | 160 | one | $2.0\times10^5$ | present | 0 | 0.1 | 0.2 | 0.1 | 0.16 | 0.09 |
| Example 7 | -70°C | 58°C | 80/20 | 160 | one | $2.5\times10^5$ | present | 0.1 | 1.3 | 4.7 | 0.12 | 0.25 | 0.12 |
| Example 8 | -70°C | 38°C | 80/20 | 160 | one | $2.3\times10^5$ | present | 0.1 | 2.5 | 5 | 0.18 | 0.29 | 0.2 |
| Example 9 | -55°C | 38°C | 80/20 | 150 | one | $2.2\times10^5$ | absent | 0 | 0.3 | 0.4 | 0.12 | 0.25 | 0.09 |
| Example 10 | -70°C | 38°C | 60/40 | 140 | one | $2.8\times10^5$ | absent | 0 | 0.2 | 0.1 | 0.08 | 0.19 | 0.06 |
| Comparative Example 1 | -70°C | 20°C | 80/20 | 160 | one | $2.1\times10^5$ | absent | 0.4 | 0.5 | 0.3 | 0.26 | 0.34 | 0.28 |
| Comparative Example 2 | -70°C | 20°C | 80/20 | 160 | one | $2.1\times10^5$ | present | 4.3 | 3.7 | 5.3 | 0.35 | 0.38 | 0.3 |
| Comparative Example 3 | -70°C | 38°C | 80/20 | 500 | plural | $1.8\times10^5$ | absent | 4.8 | 4.2 | 2.6 | >0.5 | >0.5 | >0.5 |
| Comparative Example 4 | -55°C | 4°C | 20/80 | 120 | one | $3.0\times10^5$ | absent | 0.7 | 0.8 | 0.3 | 0.03 | 0.05 | 0.04 |

While specific examples of the present invention have been described in detail above, the technique described in the claims includes various deformations and modifications of the specific examples exemplified above.

[Explanation of Symbols]

| | |
|---|---|
| 1, 2, 3, 4, 5, 6 | adhesive sheet |
| 10 | substrate |
| 21, 22 | adhesive layer |
| 31, 32 | release liner |
| 51 | sample for frictional force measurement |
| 51a | PET substrate |
| 51b | adhesive layer |
| 52 | frictional force measurement base |
| 53 | double-sided adhesive tape |
| 54 | adherend |
| 55 | anchor |
| 56 | guide |

This application is based on a patent application No. 2016-170941 filed in Japan, the contents of which are incorporated in full herein.

**Claims**

1. An aqueous dispersion-type acrylic adhesive composition of core-shell structured acrylic copolymer particles dispersed in an aqueous medium, the particles comprising core layer (A) comprising acrylic polymer (A) and shell layer (B) comprising acrylic polymer (B), wherein
the acrylic polymer (B) has a glass transition temperature of not less than 30°C and the acrylic polymer (A) has a glass transition temperature lower than that of the acrylic polymer (B).

2. The aqueous dispersion-type acrylic adhesive composition according to claim 1, wherein the glass transition temperature of the acrylic polymer (A) is less than 0°C.

3. The aqueous dispersion-type acrylic adhesive composition according to claim 1 or 2, wherein a content ratio of acrylic polymer (A) and acrylic polymer (B) ((A)/(B)) in the core-shell structured acrylic copolymer particles is 50/50 - 90/10 (weight ratio).

4. The aqueous dispersion-type acrylic adhesive composition according to any one of claims 1 to 3, wherein the core-shell structured acrylic polymer particles have a number-average particle size of 100 - 400 nm and a monomodal particle size distribution.

5. The aqueous dispersion-type acrylic adhesive composition according to any one of claims 1 to 4, wherein the acrylic polymer (B) comprises methyl methacrylate as a monomer unit.

6. An adhesive sheet having an adhesive layer formed from the aqueous dispersion-type acrylic adhesive composition according to any one of claims 1 to 5.

Fig. 1

Fig. 2

Fig. 3

3

21B —⟋ ⟍— 32
       ⟍— 21
21A —⟋ ⟍— 31

Fig. 4

4

21B —⟋ ⟍— 21
21A —⟋ ⟍— 31

Fig. 5

Fig. 6

Fig. 7

## INTERNATIONAL SEARCH REPORT

International application No.

PCT/JP2017/031289

### A. CLASSIFICATION OF SUBJECT MATTER

*C09J133/00*(2006.01)i, *C09J7/00*(2006.01)i, *C09J7/02*(2006.01)i, *C09J133/12*
(2006.01)i

According to International Patent Classification (IPC) or to both national classification and IPC

### B. FIELDS SEARCHED

Minimum documentation searched (classification system followed by classification symbols)
C09J133/00, C09J7/00, C09J7/02, C09J133/12

Documentation searched other than minimum documentation to the extent that such documents are included in the fields searched
Jitsuyo Shinan Koho          1922-1996   Jitsuyo Shinan Toroku Koho   1996-2017
Kokai Jitsuyo Shinan Koho    1971-2017   Toroku Jitsuyo Shinan Koho   1994-2017

Electronic data base consulted during the international search (name of data base and, where practicable, search terms used)
CAplus(STN)

### C. DOCUMENTS CONSIDERED TO BE RELEVANT

| Category* | Citation of document, with indication, where appropriate, of the relevant passages | Relevant to claim No. |
|---|---|---|
| X | JP 2009-525371 A  (BASF SE),<br>09 July 2009 (09.07.2009),<br>claims; examples; tables 1 to 5; paragraph<br>[0077]<br>& AT 491764 T              & CN 101374921 A<br>& EP 1813660 A1            & EP 1979430 A1<br>& RU 2008135002 A          & US 2009/0020225 A1<br>claims; examples; tables 1 to 5; paragraph<br>[0083]<br>& WO 2007/085588 A1 | 1-6 |
| X | JP 2003-201457 A  (Mitsubishi Chemical Corp.),<br>18 July 2003 (18.07.2003),<br>claims; examples; synthesis examples A-1 to A-7<br>(Family: none) | 1-6 |

☒  Further documents are listed in the continuation of Box C.      ☐   See patent family annex.

\*      Special categories of cited documents:
"A"    document defining the general state of the art which is not considered    to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search | Date of mailing of the international search report |
|---|---|
| 10 October 2017 (10.10.17) | 24 October 2017 (24.10.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

## INTERNATIONAL SEARCH REPORT

International application No.

PCT/JP2017/031289

C (Continuation). DOCUMENTS CONSIDERED TO BE RELEVANT

| Category* | Citation of document, with indication, where appropriate, of the relevant passages | Relevant to claim No. |
|---|---|---|
| X | WO 2011/145552 A1 (Nitto Denko Corp.),<br>24 November 2011 (24.11.2011),<br>claims; examples; paragraph [0068]<br>& CN 102933677 A      & JP 2012-128391 A<br>& KR 10-2013-0086151 A   & TW 201300474 A<br>& US 2013/0052457 A1<br>claims; examples; paragraph [0087] | 1-6 |
| X | JP 2002-256244 A (Nippon Carbide Industries<br>Co., Inc.),<br>11 September 2002 (11.09.2002),<br>claims; examples; paragraph [0073]<br>(Family: none) | 1-6 |
| X | JP 07-82537 A (New Oji Paper Co., Ltd.),<br>28 March 1995 (28.03.1995),<br>claims; examples; paragraph [0013]<br>(Family: none) | 1-6 |
| X | US 4091162 A (SMITH & MCLAURIN LTD.),<br>23 May 1978 (23.05.1978),<br>claims; examples; column 3, line 26; column 4<br>& AU 1268376 A         & CA 1085988 A<br>& CH 620240 A5         & DE 2614408 A1<br>& FR 2306249 A1         & GB 1541560 A<br>& IT 1059279 B | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015096579 A
- JP 2015218283 A
- JP 2016170941 A